# EUROPEAN PATENT APPLICATION

(11) **EP 4 749 866 A1**
(43) Date of publication of application: **27.05.2026**
(21) Application number: 24214668.6
(22) Date of filing: 22.11.2024
(51) Int. Cl.: H02J 3/14

(54) **METHOD FOR OPERATING A PROCESS PLANT AND CORRESPONDING PROCESS PLANT**

(71) Applicant: Linde GmbH, 82049 Pullach (DE)
(72) Inventor: Rothe, Michael, 82049 Pullach (DE); Liebhart, Christian, 82049 Pullach (DE); Heinzerling, Thomas, 82049 Pullach (DE); Kiesel, Michael, 82049 Pullach (DE)
(74) Representative: Lu, Jing

(57) **Abstract**

The invention relates to a method for operating a process plant (200), the process plant comprising one or multiple plant components (212) operated by providing electrical power received from a grid or isolated network in order to perform one or multiple processes (202), wherein the process plant (200) is configured to operate at a load up to a given maximum plant load, the method comprising: Controlling the one or at least one of the multiple processes (202) by providing electrical power to the respective plant component (212) based on variable load operating information (272), within a variable load control mode (270), and based on base load operating information (262), within a base load control mode (260), wherein, within the base load control mode, the process plant is operated at a load only up to a maximum base load, wherein the given maximum base load is less than the maximum plant load; wherein the variable load control mode (270) further comprises: Providing load availability information (272) about a currently used load at which the process plant is operating and/or about a currently available load which the process plant can in addition be operated at, preferably to a grid service provider (290); if additional load is demanded to be assigned to the process plant, Receiving load demand information (276) in response to providing the load availability information; and Adapting the variable load operating information (272) based on the load demand information (276).

## Description

The present invention relates to a method for operating a process plant, e.g., a chemical plant or electrolyser plant, wherein the plant comprises one or multiple plant components which are operated by providing electrical power in order to perform one or multiple processes, to a data processing system and to a corresponding process plant.

### Background

Systems or plants for producing electrical energy which are based on renewable energies typically have widely varying availability. Solar power plants, for example, provide electrical power only at daylight, and even then, the power output can vary with weather conditions like clouds. Wind power plants, for example, provide electrical power only with wind present, and even then, the power output depends on the wind speed or strength. With an increasing fraction of renewable energy used for generating electrical power for public electrical grids, the stability of the grid becomes more and more problematic. This also leads to unstable voltage and frequency (e.g., to be 50 Hz) within the distribution networks (grids) with an increasing probability of distribution network failure (blackout).

A way to stabilize the grid is to control how much of the power provided by the plants based on renewable energy is provided to the grid. In particular when more energy is available than needed, this can comprise damping electrical power without making any use of it. This, however, is waste of energy. Thus, an object of the present invention is to provide a way to provide a more efficient way of helping stabilizing electrical grids.

### Disclosure of the invention

This object is achieved by providing a method for operating a process plant, a data processing system and a corresponding process plant with the features of the independent claims. Embodiments of the invention are the subject of the dependent claims and of the description that follows.

The invention relates to operating a process plant and such a process plant. The method and the plant will be described together in the following. The process plant comprises one or multiple plant components which are operated by providing electrical power received from a grid (network) or from an isolated network in order to perform one or multiple processes. Such plant components are electrical consumers of the plants, e.g., power converters, rectifiers, electric motors, variable speed drives, frequency converters and the like.

The process plant is in particular an industrial process plant, i.e. a process plant of a certain size for, e.g., producing a large amount of a desired material or the like. Thus, such process plant requires a large amount of electrical energy for its operation. Such a process plant ca be a chemical plant, an electrolyser plant, a plant comprising one or more electrically driven furnaces, an air separation plant, or an ammonia plant. Also, a plant combining one of more of the mentioned types is possible. An example for such process plant is an electrolyser plant for producing hydrogen (and oxygen) from water. Such electrolyser plant comprises one or multiple electrolyser or electrolysis units and one or multiple power converters in order to convert electrical power received from the grid (typically as AC voltage) into appropriate electrical power for the electrolysers (typically DC voltage).

In general, a process plant within the present invention refers to a facility configured for the transformation of raw materials into finished products through various (industrial) processes, in particular chemical processes. For chemical plants, the definition extends to facilities that condition, liquefy, or vaporize substances such as natural gas or other chemicals for various applications. A process plant typically handles raw materials in liquid, gas, or powder form. Such plant often deals with continuous flows of materials through various stages of chemical or physical transformation. The production is often characterized by chemical reactions, mixing, separation, or other physical changes. Process plants can utilize specialized equipment such as reactors, distillation columns, heat exchangers, and piping systems. These plants often have complex control systems to manage continuous processes.

Process plants can be designed according to product requirements and a targeted value chain. The design of the electrical connection nominal power of such process plant is normally calculated for defined operating conditions for product production. Up to now, selected energy suppliers and grid service providers have only limited access to the electrical power consumption of the process plant. Typically, with a certain lead time, demands are made for the gradual dumping of electrical load or even for the shutdown of the process plant.

In view of that, an improved method for operating such process plant and such process plant are provided, which can much better cope with the volatility of electrical energy, which is a particular issue with electrical energy generated from renewable energy.

The process plant is operated with a base load and a variable load, or in a base load control mode and a variable load control mode.

The base load mode control comprises controlling the one or at least one of the multiple processes by providing electrical power to the respective plant component based on base load operating information. A control unit or other data processing system can be used to cause the respective plant component to be operated accordingly, e.g., by sending appropriate signals to the plant component. Such base load operating information can comprise information about or from different types of data sources like product buffer inventory, production forecast, contractual delivery obligations, power purchasing agreements, day ahead spot market, grid fees, transportation fees, intraday spot market, established and emerging ancillary services markets, weather forecast. Such base load operating information is typically long-term information or parameters, i.e. it changes only within hours or days or even longer terms. This base load mode allows, for example, to choose the time of operation or the amount of electrical power to use for the operation, such that cheap electrical energy can be used.

Further, the one or the at least one of the multiple processes is controlled by providing electrical power to the respective plant component based on variable load operating information. This is, in particular, part of the variable load control mode. A control unit or other data processing system can be used to cause the respective plant component to be operated accordingly, e.g., by sending appropriate signals to the plant component. Thus, the electrical power is provided based on two different types of load information. While the base load information is, as mentioned, basically of a long-term type, the variable load information is, basically, of a short-term type. Thus, other than the base load information, the variable load information can change very rapidly, in particular in real-time, e.g., within seconds or minutes.

The variable load control mode further comprises providing load availability information about a currently used load at which the process plant is operating and/or about a currently available load which the process plant can in addition be operated at. This load availability information is preferably provided to a grid service provider.

Further, this load availability information can be provided via a standardized interface (such interfaces to and/or from the grid service provider is typically standardized) from the process plant to the grid service provider (also called transmission system operator, TSO). It is noted that the currently available load which the process plant can in addition be operated at can, basically, also be determined from the currently used load at which the process plant is operating, if the maximum plant load, at which the process plant can at maximum be operated is known. If additional load is demanded to be assigned to the process plant, load demand information is received in response to providing the load availability information. The variable load operating information is then adapted based on the load demand information.

The variable load operating information and/or the load availability information can further be based on at least one of: plant process statuses, individual statuses of loads of the one or at least one of the multiple components. These statuses allow determining how much load can additionally be accepted or how the processes will behave in future.

The load availability information can be obtained, before providing it, e.g., via measurements or other ways of collecting load information. This load availability information allows the grid service provider to know how much additional load the process plant can - and does - accept. Thus, the grid service provider can assign electrical energy available in the grid to this process plant. This is of particular advantage if too much electrical power is currently generated, e.g., during a sunny summer day or a windy autumn day.

Both modes, base load mode and variable load mode are used in parallel, i.e. the entire load at which the process plant is operated, is obtained from the sum of the base load (from the base load operating information) and the variable load (from the variable load operating information).

It is noted that the variable load can be zero, if the grid service provider does not assign additional load to the process plant. Basically, the variable load can also be negative, which means that the entire load is less than the base load. This would result in less product being produced, for example. Whether or not this is possible, or to which extent this is possible, can depend on the specific process plant or its processes.

Further, within the base load control mode, the process plant is operated at a load only up to a maximum base load, wherein the maximum base load is less than a given maximum plant load. The given maximum plant load, in turn, is the load up to which the process plant is configured to operate at. In an embodiment, the given maximum plant load is at least 110% of the maximum base load. The given maximum plant load can also be at least 120%, at least 130% at least 140% or at least 150% of the maximum base load. Also, the maximum plant load could be 200% or more of the maximum base load. In this way, irrespective of the load within the base load operation, there can always additional load be assigned to the process plant. This allows great flexibility for grid service providers without affecting the amount of the actual product (nominal production, e.g. a chemical product like hydrogen), which is obtained within the process performed by the process plant. In other words, due to such (electrical) overdesign, a desired amount of product can be produced with the process plant (in the base load control mode), irrespective of whether or not or how much additional load is assigned to the process plant. If the process plant was designed only for the desired amount of product (nominal production), offering such spare load to a grid service provider would require reducing the amount of product to be produced in the base load operating mode.

It is noted that the amount of load that exceeds the maximum base load in particular is not just a safety margin or the like, which is typically only a few percent and not intended to be used in normal operation. The process plant is to be designed for higher load that what is necessary for a nominal production of a certain product, even considering safety margins.

In an embodiment, the process plant is configured to operate with an active power load and a reactive power load. Correspondingly, the load availability information can comprise both, active load availability information and reactive load availability information. Accepting additional reactive load, for example, does not or not much affect the production output of the actual (chemical) process but allows the grid service provider to get rid of some of too much energy.

In particular, the (electrical) overdesign allows that while within the base load control mode, a nominal amount or rate of product of the one or more processes is obtained, within the variable load control mode, in a first variant, the process plant is operated such that the amount or rate of product of the one or more processes that is obtained, is at least essentially not changed with respect to the nominal amount or rate. In other words, the process plant can accept additional load which the service grid provided can get rid of, while not affecting the actual output of product. This means that there is an additional service that can be provided by the process plant: not only producing a certain chemical product at (essentially) constant production amount or rate, but also offering to accept superfluous amount of electrical energy, which could otherwise (negatively) affect grid stability.

In an embodiment, the (chemical) process(es) performed by the process plant are variable or flexible (process overdesign). That is, within the variable load control mode, in a second variant, the process plant is operated such that the amount or rate of product that is obtained, is (essentially) changed with respect to the nominal amount or rate. The flexible chemical (process) thus can increase the range of electrical controllability (increased electrical controllability if the chemical plant accepts a lower production output). In other words, if necessary or otherwise convenient, decrease of the product amount or rate can be accepted to allow grid stability. This allows can allow to increase the amount or rate of product if necessary. Dunedin on the situation, this might require additional active and/or reactive load to accept.

To sum up, the method provides a real-time control of electrical active power and electrical reactive power through the interaction of a flexible (e.g. chemical) process, requirements for control components and for the electrical equipment. It allows automatic stabilization of regional grid frequency in real time by adapting the active power load dynamically of electrical power consumers, and automatic stabilization of regional voltage level in real time by adapting the reactive power load dynamically, as demanded by TSO via interface or dedicated measurements, at least within boundary limits and within plant turndown limits.

It is noted that there are some design aspects for the process plant to be considered, in order to provide sufficient variability in load. This might also include providing or offering staggered scenarios or multiple layers of real time grid services respectively.

The electrical equipment for the process plant, i.e., the plant components which are provided with the electrical power received from the grid, can be specifically chosen. For example, an Active Front End (AFE) or IGBTs or a synchronous machine can be required to compensate reactive power. The process plant provides a certain overdesign in order to cope with higher electrical load than for the base load operation. In this way, electrical flexibility can always be offered to the TSO. This results in active and reactive power having no negative impact on production (no loss or additional production for compensation). The process itself can also be overdesigned in order to provide sufficient flexibility. Such flexibility in the process(es) can always be offered to the TSO within plant turndown limits. On average higher revenues can be achieved by grid services than production output (or product venting or lower efficiency of product generation process. This can be considered as primary reserve.

As a secondary reserve, a shut down and restart of the process plant may be considered. This might require the process(es) to have respective flexibility. This might be offered only at exceptionally high price for grid services, because such provision of ultima ratio grid services exceeding plant turndown limits typically negatively influences equipment lifetime (e.g. time until the specified product can again be provided) or standard plant operations (e.g. takes two days to restart).

In contrast to the current site selection and the required amount of (chemical) product, the (chemical) process plants discussed above can instead be located at sites that require increased grid support measures. Furthermore, the locally available share of renewable energy should be taken into account when selecting the location. This is in contrast to the previous focus on the product side of the (chemical) process plant.

A data processing system according to the invention, e.g., a computer, a plant control unit or other computing or control system, is configured, to perform the steps of a method according to the invention.

There is also provided a corresponding process plant comprising one or multiple plant components which are operated by providing electrical power in order to perform one or multiple processes. The process plant further comprises a data processing system as mentioned above.

For further embodiments and advantages of the process plant it is referred to the description of the method and respective embodiments, which applies accordingly. In particular, the process plant implements the method according to any one of the mentioned embodiments. This may require the process plant comprising one or more additional components and/or specified components mentioned in the respective embodiment.

The implementation of a method according to the invention in the form of a computer program or computer program product with program code for performing all method steps is also advantageous, since this causes particularly low costs, especially if an executing control unit is still used for further tasks and is therefore present anyway. Finally, a machine-readable storage medium is provided with a computer program stored thereon as described above. Suitable storage media or data carriers for providing the computer program are, in particular, magnetic, optical and electrical memories, such as hard disks, flash memories, EEPROMs, DVDs and the like. It is also possible to download a program via computer net-works (Internet, intranet, etc.). Such a download can take place wired or wirelessly (e.g. via a WLAN network, a 3G, 4G, 5G or 6G connection, etc.).

Further advantages and embodiments of the invention will be apparent from the description and the accompanying drawing. The invention is illustrated schematically by means of embodiments in the drawing and is described below with reference to the drawing.

### Short description of the figures

Fig. 1 illustrates a process plant for explaining the invention in an embodiment; and
Fig. 2 illustrates a flow diagram for explaining the invention in an embodiment.

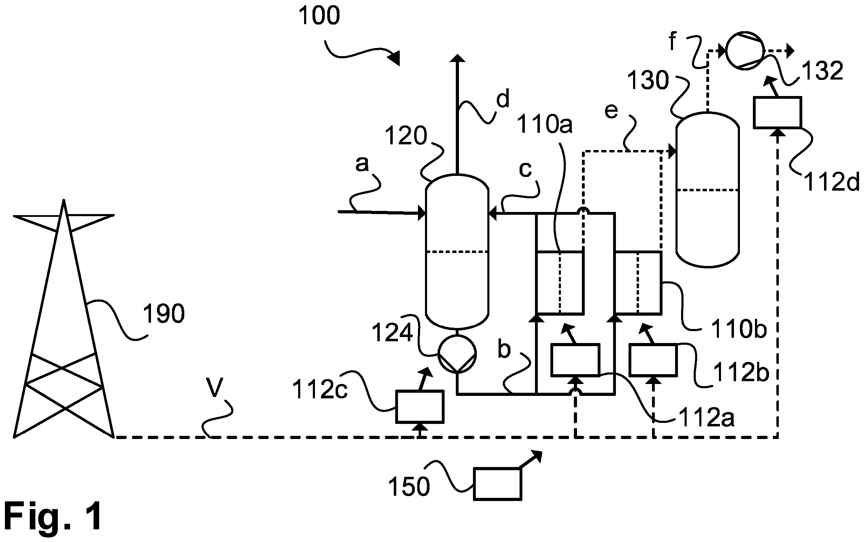

Fig. 1 schematically illustrates an exemplary process plant 100 for explaining the invention in an embodiment, and in which a method according to the invention can also be carried out. The process plant 100 is shown as an industrial process plant and as an electrolyser plant, in particular for water electrolysis by means of PEM (Proton Exchange Membrane). As mentioned above, the present invention can be used for different kinds of process plants; thus, the shown process plant is only for illustration purposes.

The process plant 100 is an electrolyser plant on an industrial scale, for example to produce hydrogen on an industrial scale. A typical power of such an electrolyser plant is, for example, more than 10 MW or even more than 100 MW.

The process plant 100 comprises, by means of example, two electrolysis units or stacks 110a, 11 0b. Each of such stack can have multiple electrolysis cells, in each of which a proton exchange membrane (PEM) is provided. The PEM separates the electrolysis cells into an oxygen side and a hydrogen side. Depending on the size of the process plant, many more stacks can be provided.

The process plant 100 also comprises a container 120 that serves as an oxygen separator or oxygen-water separator. The oxygen separator 120 is connected to the stacks 110a, 110b or each of the electrolytic cells via a fluid connection. This allows a fluid flow b to be pumped from the oxygen separator 120 to the stacks, e.g. by means of a pump 124, via e.g. pipes.

The stacks and/or the electrolysis cells are also connected to the oxygen separator 120 via a further fluid connection, e.g. pipes. A fluid stream c can be pumped through this fluid connection from the electrolysis cells, there from the oxygen side, to the oxygen separator 120; the pump 124 may also be sufficient for this.

In addition, the process plant 100 comprises a further container 130, which serves as a hydrogen separator or hydrogen-water separator. The stacks or the electrolysis cells are connected to the hydrogen separator 130 via a fluid connection, e.g. pipes. A fluid flow e from the electrolysis cells, there from the hydrogen side, can be conducted through the fluid connection to the hydrogen separator 130.

When the process plant 100 is in operation, the fluid stream b, which contains water, is pumped from the oxygen separator 120 to the stacks. There, the water is converted into oxygen and hydrogen. To do this, an electrical voltage is applied to the electrolysis cells, the hydrogen is transported electrochemically through the PEM to the hydrogen side and can be supplied from there, possibly still mixed with water vapor and a liquid water phase, as a stream e - a hydrogen-containing fluid stream - to the hydrogen separator 130. The hydrogen can be separated there and removed as stream f, e.g. for further use or storage. A compressor 132 can be used to compress the hydrogen of stream f for storage, for example.

The oxygen remains on the oxygen side together with most of the water. The resulting fluid stream c therefore contains water and oxygen - it is an oxygen-containing fluid stream. As mentioned, fluid stream c is fed to the oxygen separator 120. Since water is converted into oxygen and hydrogen in the electrolytic cells and the oxygen and hydrogen are removed, the amount of water decreases and, in order to maintain continuous operation, new water (so-called make-up water) must be supplied from an external source as stream a.

As mentioned, oxygen is separated from the water in the oxygen separator 120; the oxygen separated or discharged in this process can be discharged as an oxygen stream d, for example for further use, and can be stored if necessary.

The products of the process plant 100, which are obtained from the electrolysis process, are thus hydrogen and oxygen as mentioned above. As also mentioned, an electrical voltage is applied to the electrolysis cells, in order to facilitate the required process. In order to provide an appropriate voltage to the electrolysis cells, power converters 112a, 112b are provided, one of them for a respective one of the stacks 110a, 110b. It is noted that different designs are possible, e.g., a larger power converter for multiple stacks or also multiple power converters for a (large) stack. Further, power converters 112c, 112d are provided for the pump 124 and the compressor 132, respectively.

These power converters 112a, 112b, 112c, 112d are provided with electrical power from a grid, which is exemplarily indicated with 190. The electrical power provided from the grid and received by the power converters is indicated with V. Generally, the power converters 112a, 112b, 112c, 112d are plant components, i.e. electrical consumers of the plant, which are operated by providing electrical power received from a grid in order to perform one or multiple processes.

Further, the process plant 100 comprises a data processing or computer system 150, e.g. a plant control unit or plant controller, for operating the electrolysis cells or stacks - via the power converters - and for controlling the regulation of, for example, water flow rates and, possibly indirectly, temperatures. Corresponding sensors can supply measured values or measurement data for this purpose. Note that the data processing system 150 can also comprise multiple individual control units or the like.

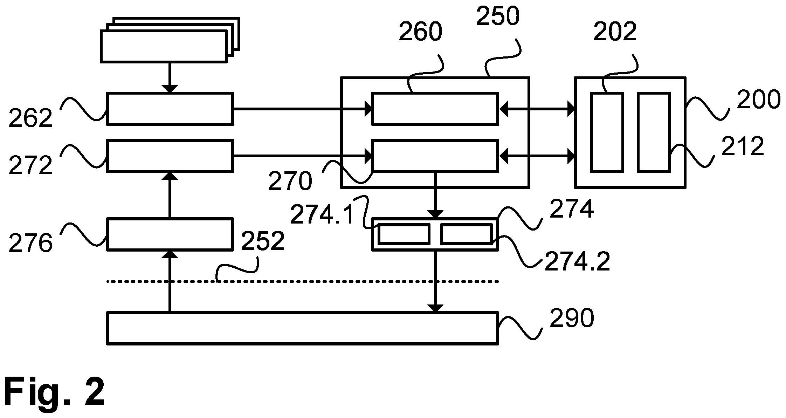

Fig. 2 illustrates, in a flow diagram, a method in an embodiment, which can be performed with the process plant of Fig. 1, for example. A data processing system 250 is shown, which can be a plant control unit, used to control a process plant 200. Controlling the process plant 200 comprises controlling a process 202, which is performed by the process plant 200, by providing electrical power to the respective plant component 212 (not that this might include multiple plant components, depending on the process plant). In the example of Fig. 1, the process is the electrolysis process and the plant components are the power converters.

Controlling the process is performed using a variable load control mode 270, and a base load control mode 260. Both modes can be performed in parallel. Both modes can be provided within a combined control unit, or in separate control units, which are then part of the data processing system 250

Within the base load control mode 260, the process is controlled and the electrical power is provided based on base load operating information 262. Such base load operating information can be input data for the base load control, and can comprise information about or from different types of data sources like power purchasing agreements, day ahead spot market, grid fees, intraday spot market, weather forecast. Within this base load control mode, changes will typically occur only within hours or days or even longer terms. This allows, for example, to choose the time of operation or the amount of electrical power to use for the operation, such that cheap electrical energy can be used. For example, if cheap electrical energy is expected to be provided for the next two days, the process can be adjusted so as to generate a higher amount of product like hydrogen.

Within the base load control mode, the process plant is operated only up to a maximum base load, which in turn is less than a maximum plant load, up to which the process plant can be operated at. For example, the maximum plant load can be at least 110% or at least 150% of the maximum base load. Then, even with very cheap energy available, only as much product will be generated, within the base load control mode, as the of the maximum base load allows. For example, if the process plant is an electrolyser plant having twelve stacks, eight stacks are operated at full load, or each of the ten stacks is operated at 66% load. It is noted that depending on the type of process plant, it might differ how such maximum base load is achieved. This, in particular, allow producing a certain or nominal amount of product.

Within the variable load control mode 270, the process is controlled and the electrical power is provided based on variable load operating information 272. This variable load control mode is performed in real-time, i.e. within this variable load control mode, changes will - or at least can - occur only within seconds or minutes.

In order to achieve this, the variable load control mode 270 comprises providing load availability information 272 preferably to a grid service provider 290. This can be via an interface 252 from the data processing system 250 to the grid service provider 290. The load availability information 272 is about a currently used load at which the process plant is operating and/or about a currently available load which the process plant can in addition be operated at. This load availability information 272 can be obtained using measurements or other operating information like plant statuses and the like.

If additional load is demanded to be assigned to the process plant, load demand information 276 is received in response to providing the load availability information. The load demand information 276 can be provided by the grid service provider 290 in response to the provision of the load availability information. It is noted that these steps can be performed automatically, i.e. once the load availability information changes, the load demand information can instantaneously change. Based on the load demand information 276, the variable load operating information 272 is adapted.

With the example of above, if there are twelve stacks, eight of them may continuously be operated at full load for two days (within the base load operating mode). The operation of the remaining four stacks, however, might be changed very rapidly. For example, the load availability information indicates that the process plant can cope with additional load corresponding to four stacks or 33% of the maximum plant load. The grid service provider may, for example, have additional load corresponding to two stacks or 17% of the maximum plant load which can and shall be assigned to the process plant, due to a sunny day and solar energy provided. The process plant will then be operated at 87% of the maximum plant load, e.g., adding two stacks being operated at full load each.

This also means that the load availability information indicates that the process plant can cope with additional load corresponding to two stacks or 17% of the maximum plant load. The grid service provider may later, for example after 20 minutes, have additional load corresponding to two stacks or 17% of the maximum plant load which can and shall be assigned to the process plant, due to wind and wind energy provided. The process plant will then be operated at 100% of the maximum plant load, e.g., adding two stacks being operated at full load each.

In this way, the variable power load can, e.g., rapidly change, while the base power load will typically remain constant for a certain time.

The process plant can be configured to operate with an active power load and a reactive power load. Then, the load availability information 274 comprises active load availability information 274.1 and reactive load availability information 274.2. The active load availability information refers to used and/or available active power load of the process plant, and the reactive load availability information refers to used and/or available reactive power load of the process plant. This allows that accepting additional load for operating the process plant does not mean that the amount of product is changed.

Then, the load demand information 276 (setpoint provided by the grid service provider or TSO) can also differentiate between active and reactive power to be assigned to the process plant. Note that the load demand information for reactive power and active power can be different. The maximum level of reactive power compensation typically always depends on the respective active power (depending on the operating point). This ratio depends on the manufacturer's specifications. Further note that the active and reactive load availability information will, of course, depend on the active and reactive load the process plant can cope with. For example, at 100% nominal active power load (without overdesign of plant components) the plant can compensate about 33% reactive power. Whereby at 60% nominal active power load (without overdesign of plant components) the plant can compensate about 80% reactive power.

## Claims

1. A method for operating a process plant (100, 200), wherein the process plant comprises one or multiple plant components (112a, 112b, 112c, 112d, 212) which are operated by providing electrical power (V) received from a grid or isolated network (190) in order to perform one or multiple processes (202), wherein the process plant (100, 200) is configured to operate at a load up to a given maximum plant load,
the method comprising:
Controlling the one or at least one of the multiple processes (202) by providing electrical power (V) to the respective plant component (112a, 112b, 212) based on variable load operating information (272), within a variable load control mode (270), and based on base load operating information (262), within a base load control mode (260), wherein, within the base load control mode, the process plant is operated at a load only up to a maximum base load, wherein the given maximum base load is less than the maximum plant load;
wherein the variable load control mode (270) further comprises, preferably in real-time:
Providing load availability information (272) about a currently used load at which the process plant is operating and/or about a currently available load which the process plant can in addition be operated at, preferably to a grid service provider (290);
if additional load is demanded to be assigned to the process plant, Receiving load demand information (276) in response to providing the load availability information; and
Adapting the variable load operating information (272) based on the load demand information (276).

2. The method of claim 1, wherein, within the base load control mode, a nominal amount or rate of product of the one or more processes is obtained, and wherein, within the variable load control mode, in a first variant, the process plant is operated such that the amount or rate of product of the one or more processes that is obtained, is at least essentially not changed with respect to the nominal amount or rate.

3. The method of claim, wherein, within the variable load control mode, in a second variant, the process plant is operated such that the amount or rate of product that is obtained, is changed with respect to the nominal amount or rate.

4. The method of any one of the preceding claims, wherein the process plant (100, 200) is configured to operate with an active power load and a reactive power load, wherein the load availability information (274) comprises active load availability information (274.1) and reactive load availability information (274.2), wherein the active load availability information refers to used and/or available active power load of the process plant, and wherein the reactive load availability information refers to used and/or available reactive power load of the process plant.

5. The method of any one of the preceding claims, wherein the variable load control mode (270) is performed in real-time.

6. The method of any one of the preceding claims, wherein the given maximum plant load is at least 110%, preferably at least 150%, but could also be increased further to 200% and more of the maximum base load.

7. The method of any one of the preceding claims, wherein the one or the multiple plant components (112a, 112b, 212) comprise at least one of the following components: power converters, rectifiers, electric motors, variable speed drives, frequency converters.

8. The method of any one of the preceding claims, wherein the variable load operating information (272) and/or the load availability information (274) is further based on at least one of: plant process statuses, individual statuses of loads of the one or at least one of the multiple components.

9. The method of any one of the preceding claims, wherein the base load operating information (262) comprises information about at least one of the following: product buffer inventory, production forecast, contractual delivery obligations, power purchasing agreements, day ahead spot market, grid fees, transportation fees, intraday spot market, established and emerging ancillary services markets, weather forecast.

10. The method of any one of the preceding claims, wherein the process plant (100, 200) is one of the following industrial process plants: a chemical plant, an electrolyser plant, a plant comprising one or more electrically driven furnaces, an air separation plant, an ammonia plant.

11. A data processing system (150, 250) comprising means to perform the steps of the method of any one of the preceding claims.

12. A computer program comprising instructions which, when the program is executed by a computer, cause the computer to perform the steps of the method of any one of claims 1 to 10.

13. A process plant (100, 200), comprising one or multiple plant components (112a, 112b, 212) which are operated by providing electrical power received from a grid (190) in order to perform one or multiple processes, the process plant (100, 200) further comprising a data processing system (150, 250) according to claim 10.
